# EUROPEAN PATENT SPECIFICATION

(11) **EP 3 647 676 B1**
(45) Date of publication and mention of the grant of the patent: **08.03.2023**
(21) Application number: 18203077.5
(22) Date of filing: 29.10.2018
(51) Int. Cl.: F24H 9/1863, F24H 3/04, H05B 3/50, B60H 1/22

(54) **HEAT EXCHANGER FOR AN AIR-CONDITIONING SYSTEM IN PARTICULAR OF A MOTOR VEHICLE**
WÄRMETAUSCHER FÜR EIN KLIMAANLAGENSYSTEM, INSBESONDERE EINES KRAFTFAHRZEUGS
ÉCHANGEUR DE CHALEUR POUR UN SYSTÈME DE CONDITIONNEMENT D'AIR, EN PARTICULIER D'UN VÉHICULE AUTOMOBILE

(43) Date of publication of application: 06.05.2020
(73) Proprietor: Mahle International GmbH, 70376 Stuttgart (DE)
(72) Inventor: MARLIER, Eric, 67120 Kolbsheim (FR); ROLLET, David, 68130 Carspach (FR); STOECKEL, Jérôme, 68540 Bollwiller (FR); VIEHRIG, Falk, 70469 Stuttgart (DE); WOLF, Walter, 71570 Oppenweiler-Zell (DE)
(74) Representative: BRP Renaud & Partner mbB Rechtsanwälte Patentanwälte Steuerberater

(56) References cited:
- EP-A1- 2 053 902
- EP-A2- 1 545 157
- FR-A1- 2 793 546

## Description

The invention relates to a heat exchanger for an air-conditioning system in particular of a motor vehicle. The invention, furthermore, relates to an air-conditioning system having such a heat exchanger and to a motor vehicle having such an air-conditioning system.

Electric PTC heating elements are employed in air-conditioning systems of motor vehicles in order to heat the air provided by the system. For this purpose, the PTC heating elements, as part of a heat exchanger, are arranged in an air path arranged by the air to be heated, so that the heat generated by the PTC heating elements can be transferred to the air by thermal interaction.

Said PTC heating elements are heating resistors, which with increasing temperature generate less heating output and thus also less heat. Thus, PTC heating elements are positive temperature coefficient thermistors.

Here it proves to be problematic that at too high a temperature of the air conducted past a PTC heating element, insufficient heat can be dissipated from the PTC heating element. In this case, the temperature of the PTC heating element increases as a result of which in turn the power output of the PTC heating element can consequently drop significantly. This in turn leads to an at least temporarily insufficient heating of the air.

It is an object of the present invention to create an improved embodiment for a heat exchanger, with which the problem explained above, is at least partly - ideally even completely - eliminated. Document FR2 793 546 discloses a heat exchanger having the features of the preamble of claim 1.

This object is solved through the subject of the independent patent claim 1.

Preferred embodiments are subject of the dependent patent claims.

Accordingly, the basic idea of the invention is to place PTC heating elements of a heat exchanger in a heat exchanger nearer the air inlet than the air outlet of the air path conducted through the heat exchanger. Simulation calculations and experimental investigations have shown that in this way a more even heating of the air relative to air inlet and air outlet can be achieved compared with conventional heat exchangers with symmetrical arrangement of the PTC heating elements. Undesirable temporal fluctuations during the transmission of heat from the PTC heating elements to the air flowing through the air path can thus be prevented or - compared with conventional heat exchangers - significantly reduced. As a consequence, undesirable temporal temperature fluctuations in the air conducted through the heat exchanger are also minimised or even completely prevented. In the result, the heat exchanger according to the invention introduced here makes possible a homogeneous heating of air.

A heat exchanger according to the invention for an air-conditioning system, in particular of a motor vehicle, comprises multiple PTC heaters for heating the air conducted through the heat exchanger. The PTC heaters are arranged at a distance from one another so that the intermediate spaces that are present in each case between two adjacent PTC heaters form an air path through which the air can flow. At least one PTC heater comprises a tubular body with two longitudinal walls extending along a longitudinal direction, in which along the longitudinal direction a plurality of PTC heating elements is arranged next to one another. This is preferably true for all PTC heaters of the heat exchanger. According to the invention, the PTC heating elements are arranged at a shorter distance from a first longitudinal wall of the tubular body than from a second longitudinal wall located opposite the first longitudinal wall.

According to a preferred embodiment, the two first longitudinal walls of two adjacent tubular bodies delimit an air inlet for introducing the air into the air path formed between the two tubular bodies. Accordingly, the two second longitudinal walls of these two tubular bodies delimit an air outlet for discharging the air from this air path. This embodiment requires particularly little installation space.

According to a further preferred embodiment, a first distance between the PTC heating elements and the first longitudinal wall measured perpendicularly to the longitudinal direction is shorter than a second distance between these PTC heating elements and the second longitudinal wall located opposite the first longitudinal wall measured perpendicularly to the longitudinal direction. With this embodiment, the PTC heating elements can be particularly precisely positioned along the flow direction of the air path or intermediate space into the air path, so that the distance differential of the PTC heating elements from air inlet and air outlet characterising the invention - wherein the PTC heating elements are arranged nearer the air inlet than the air outlet - can be particularly precisely adjusted.

Practically, the difference between the first and the second distance can be at least 2 mm. Alternatively or additionally, the first distance can be 0 mm to 2 mm and the second distance can be 2 to 4 mm.

Particularly preferably, at least one PTC heating element comprises a heating ceramic which is arranged sandwich-like between two electrical contact plates for electrically connecting the heating ceramic to an electric voltage source. In this version, the heating ceramic is formed plate-like with a first and second heating ceramic longitudinal side. Thus, the distance of the heating element from the first and second longitudinal wall of the body that is substantial for the invention can be fixed or measured with respect to the first or second heating ceramic longitudinal side. In addition, this embodiment is a particularly low construction.

According to the invention, a rib structure is arranged in at least one intermediate space that is present between two adjacent PTC heaters, which extend along a transverse direction orthogonally to the longitudinal direction. By means of the rib structure, which can comprise a multiplicity of rib elements designed rib-like, the thermal connection between the PTC heating elements of the respective PTC heaters and the air flowing through the associated air path can be improved. This improves the efficiency of the heat exchanger.

According to the invention, the rib structure projects over the two first longitudinal walls of the two tubular bodies delimiting the intermediate space along the transverse direction. Experimental investigations have shown that in this way a particularly homogeneous temporal temperature-controlling of the air can be achieved. Particularly practically, the rib structure protrudes over the two first longitudinal walls along the transverse direction by up to maximally 4 mm.

Practically, the PTC heaters are stacked on top of one another along a stacking direction, which extends perpendicularly both regarding the longitudinal and also transverse direction. Here, the respective rib structure that is present in the intermediate space between two adjacent PTC heaters supports itself on the two tubular bodies which are adjacent along the stacking direction. Such a stack-like construction allows the heating of air which is suitably conducted through a plurality of air paths.

The invention also relates to an air-conditioning system having a heat exchanger introduced above. The advantages of the heat exchanger according to the invention explained above can thus also be transferred to the air-conditioning system according to the invention.

The invention finally relates to a motor vehicle having an air-conditioning system explained above.

Further important features and advantages of the invention are obtained from the independent claims.

Preferred exemplary embodiments of the invention are shown in the drawings and are explained in more detail in the following description, wherein same reference characters relate to same or similar or functionally same components.

It is to be understood that the features mentioned above and still to be explained in the following cannot only be used in the respective combination stated but also in other combinations or by themselves without leaving the scope of the present invention, which is defined by the appended claims.

It shows, in each case schematically:
- Fig. 1: a PTC heater of a heat exchanger not belonging to the invention in a cross section,
- Fig. 2: the PTC heater of Figure 1 in a longitudinal section,
- Fig. 3: the PTC heater of Figure 1 in a a longitudinal section through the PTC ceramic,
- Fig. 4: a version of the PTC heater according to the invention.

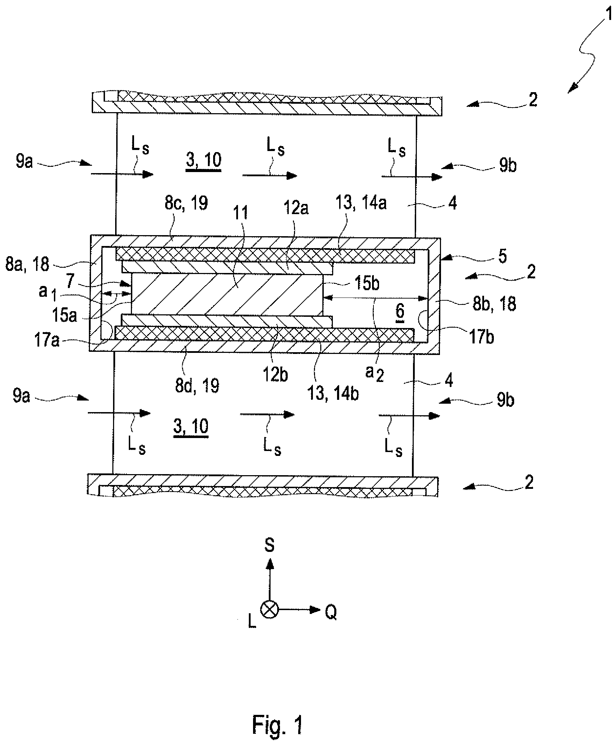

Figure 1 shows exemplarily a PTC heater 2 of a heat exchanger, which can be employed in an air-conditioning system (not shown) of a motor vehicle, in a sectional representation.

Accordingly, the heat exchanger 1 comprises multiple PTC heaters 2 for heating the air L_{S} conducted through the heat exchanger, which are arranged at a distance from one another and are stacked on top of one another along a stacking direction S, so that the respective intermediate spaces 3 that are present between two adjacent PTC heaters form an air path 10 through which the air L_{S} can flow. In the intermediate spaces 3 a rib structure 4 each can be arranged, which is only roughly schematically indicated in Figure 1.

In Figure 1, only a single PTC heater 2 with the intermediate spaces 3 which are adjacent in the stacking direction S is completely shown for the sake of clarity.

The PTC heater 2 comprises a tubular body 5 with two longitudinal walls 8a, 8b extending along a longitudinal direction L. These two longitudinal walls 8a, 8b are referred to as first and second longitudinal wall 8a, 8b in the following, lie, in the cross section shown in Figure 1, opposite one another perpendicularly to the longitudinal direction L and in this cross section form narrow sides 18 of the tubular body 5. Two further longitudinal walls 8c, 8d of the tubular body 5, which likewise lie opposite one another in the cross section of Figure 1 and are arranged perpendicularly to the first and second longitudinal wall 8a, 8b, form broad sides 19 of the tubular body 5 and complete the first and second longitudinal wall 8a, 8b to form the tubular body 5. In the cross section of Figure 1, the tubular body with the four longitudinal walls 8a - 8d has the geometry of a rectangle with two narrow sides 18 and two broad sides 19. The longitudinal direction L in this case extends orthogonally to the stacking direction S. The tubular body 5 with the longitudinal walls 8a - 8d delimits a tubular body interior 6, in which the longitudinal direction L multiple PTC heating elements 7 are arranged next to one another and at a distance from one another.

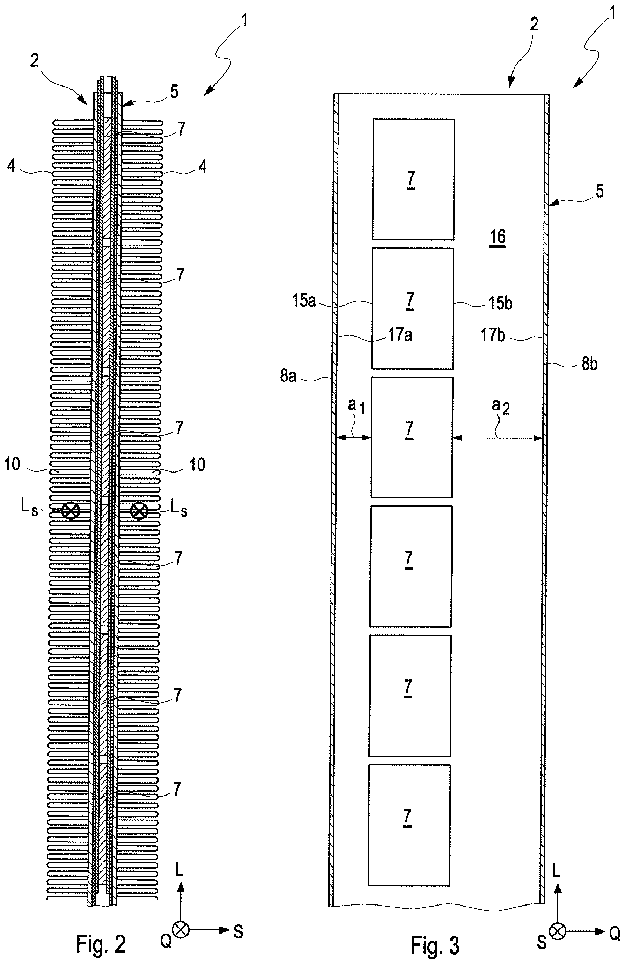

Figure 2 shows the tubular body 5 of the PTC heater 2 in a longitudinal section along the longitudinal direction L, Figure 3 a plan view of an inner side 16 of the tubular body 5 in a greatly simplified representation. In Figures 2 and 3, six PTC heating elements 7 are exemplarily shown.

From both Figure 1 and also Figure 3 it is evident that the PTC heating elements 7 are arranged at a shorter distance from a first longitudinal wall 8a of the tubular body 5 than from the second longitudinal wall 8b located opposite the first longitudinal wall 8a. A first distance a1 measured along the transverse direction Q and thus perpendicularly to the longitudinal direction L between the PTC heating elements 7 and the first longitudinal wall 8a of the tubular body 5 is thus shorter than a distance a2 likewise measured perpendicularly to the longitudinal direction L between these PTC heating elements 7 and the second longitudinal wall 8b of the same tubular body 5, which is located opposite the first longitudinal wall 8a.

In the exemplary scenario, the difference D between the first distance a1 and the second distance a2 amounts to at least 2 mm; alternatively or additionally, the first distance a1 can amount to 0 mm to 2 mm and the second distance at least 2 mm to 4 mm.

According to Figure 1, the PTC heating element 7 arranged in the respective tubular body interior 6 comprises a heating ceramic 11, which is arranged sandwich-like between two electrical contact plates 12a, 12b. The two electrical contact plates 12a, 12b are formed so as to be electrically conductive and serve for electrically connecting the heating ceramic 11 to an electric voltage source. The two electrical contact plates 12a, 12b preferably consist of a metal or another suitable electrically conductive material. Since the material of the tubular body 5 is typically likewise a metal, i.e. an electrically conductive material, an electrical insulation 13, preferably a single layer or multilayer insulation, is provided between the two electrical contact plates 12a, 12b, which can comprise two electrically insulating insulation layers 14a, 14b of an electrically insulating material, preferably a plastic. A first insulation layer 14a is arranged between a first electrical contact plate 12a and a third longitudinal wall 8c of the tubular body 5, which connects the first and the second longitudinal wall 8a, 8b with one another. A second insulation layer 14b is arranged between a second electrical contact plate 12b and a fourth longitudinal wall 8c of the tubular body 5, which likewise connects the first and the second longitudinal wall 8a, 8b with one another and is located opposite the third longitudinal wall 8c. The heating ceramic 11 is also formed plate-like and has a first and a second heating ceramic longitudinal side 15a, 15b. The first or second distance a1, a2 of the PTC heating element 11 explained above from the first and second longitudinal wall 8a, 8b of the tubular body 5 is fixed or measured with respect to the first or second heating ceramic longitudinal side 15a, 15b and an inner side 17a, 17b.

The two first longitudinal walls 8a of two adjacent tubular bodies 5 delimit an air inlet 9a for introducing the air L_{S} into the air path 10 formed between the two tubular bodies 5, which extends along a transverse direction Q running orthogonally to the longitudinal direction L_{S}. Accordingly, the two second longitudinal walls 8b of these two tubular bodies 5 delimit an air outlet 9b for discharging the air from this intermediate space 3 or air path 10.

The rib structures 4 shown in the Figures 1 and 2, each of which is arranged in the intermediate space 3 that is present between two adjacent PTC heaters 2, extends along the transverse direction Q, which runs orthogonally to the longitudinal direction L. The stacking direction S, the longitudinal direction L and the transverse direction Q thus each extend perpendicularly to one another. The rib structure 4 supports itself on the two tubular bodies 5 that are adjacent along the stacking direction and can be (soldered or) bonded to these.

As shown in Figure 1, the tubular body 5 can protrude over the adjacent rib structures in the cross section that is perpendicular to the longitudinal direction L.

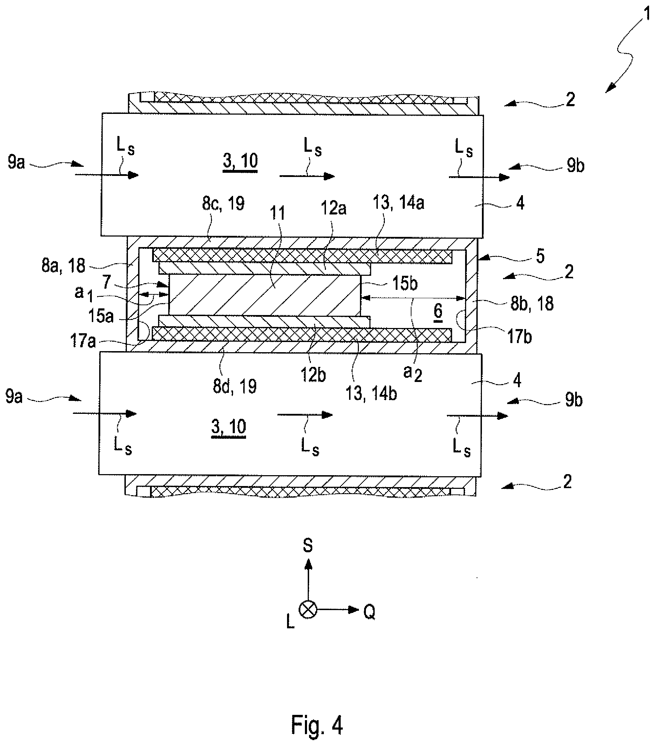

In contrast, in figure 4, according to the invention, the rib structure 4 protrudes in the cross section perpendicularly to the longitudinal direction L along the transverse direction Q over the two first longitudinal walls 8a, 8b of the two tubular bodies 5 delimiting the intermediate space 3. In this case it proves to be advantageous if the rib structure 4 protrudes along the transverse direction Q by maximally 4 mm over the two first longitudinal walls 8a, 8b.

## Claims

1. A heat exchanger (1) for an air-conditioning system, in particular of a motor vehicle,
- having multiple PTC heaters (2) for heating the air (L_{S}) conducted through the heat exchangers (1), which are arranged at a distance from one another, so that the respective intermediate spaces (3) that are present between two adjacent PTC heaters (2) in each case form an air path (10) through which the air (L_{S}) can flow,
- wherein at least one PTC heater (2) comprises a tubular body (5) with two longitudinal walls (8a, 8b) which extend along a longitudinal direction (L), in which along the longitudinal direction (L) a plurality of PTC heating elements (7) is arranged next to one another,
- wherein the PTC heating elements (7) are arranged at a shorter distance (a1) from a first longitudinal wall (8a) of the tubular body (5) than a second longitudinal wall (8b) located opposite the first longitudinal wall (8a),
- wherein in at least one intermediate space (3) that is present between two adjacent PTC heaters (2) a rib structure (4) is arranged, which extends along a transverse direction orthogonally to the longitudinal direction,
**characterized in that**
- the rib structure (4) protrudes over the first longitudinal walls (9a, 9b) of the two tubular bodies (5) delimiting the intermediate space (3) along the transverse direction (Q).

2. The heat exchanger according to Claim 1,
**characterized in that**
- the two first longitudinal walls (8a) of two adjacent tubular bodies (5) delimit an air inlet (9a) for introducing the air (L_{S}) into the air path (10) formed between the two tubular bodies (5); and **in that**
- the two second longitudinal walls (8a, 8b) of these two tubular bodies (5) delimit an air outlet (9b) for discharging the air (L_{S}) from this air path (10).

3. The heat exchanger according to Claim 1 or 2,
**characterized in that**
a first distance (a1) measured perpendicularly to the longitudinal direction (L) between the PTC heating elements (7) and the first longitudinal wall (8a) is shorter than a second distance (a2) measured perpendicularly to the longitudinal direction (L) between these PTC heating elements (7) and the second longitudinal wall (8b) located opposite the first longitudinal wall (8a).

4. The heat exchanger according to Claim 3,
**characterized in that**
a difference (D) between the first and the second distance (a1, a2) amounts to at least 2 mm; or/and **in that**
the first distance (a1) amounts to maximally 5 mm and the second distance amounts to at least 2 mm (a2).

5. The heat exchanger according to any one of the preceding claims,
**characterized in that**
- at least one PTC heating element (7) comprises a heating ceramic (11), which is arranged sandwich-like between two electrical contact plates (12a, 12b ) for electrically connecting the PTC heating ceramic (11) with an electric voltage source,
- the PTC heating ceramic (11) is formed plate-like with a first and second heating ceramic longitudinal side (15a, 15b),
- the first or second distance (a1, a2) of the PTC heating element (7) from the first and second longitudinal wall (8a, 8b) of the tubular body (5) is fixed or measured with respect to the first or second heating ceramic longitudinal side (15a, 15b).

6. The heat exchanger according to any of the preceding claims,
**characterized in that**
the rib structure (4) protrudes along the transverse direction (Q) by maximally 4 mm over the first two longitudinal walls (9a, 9b).

7. The heat exchanger according to any one of the preceding claims,
**characterized in that**
- the multiple PTC heaters (2) are stacked on top of one another along a stacking direction (S) which extends perpendicularly both to the longitudinal and also transverse direction (L, Q),
- the rib structure (4) supports itself on the two tubular bodies (5) which are adjacent along the stacking direction (S).

8. An air-conditioning system having a heat exchanger (1) according to any one of the preceding claims.

9. A motor vehicle having an air-conditioning system according to Claim 8.

## Patentansprüche

1. Wärmeübertrager (1) für ein Klimaanlagensystem, insbesondere eines Kraftfahrzeugs,
- der mehrere PTC-Heizer (2) zum Erhitzen der Luft (Lₛ) aufweist, die durch die Wärmeübertrager (1) geleitet wird, die in einem Abstand voneinander angeordnet sind, sodass die jeweiligen Zwischenräume (3), die zwischen zwei benachbarten PTC-Heizern (2) vorhanden sind, in jedem Fall einen Luftpfad (10) bilden, durch den die Luft (Lₛ) strömen kann,
- wobei mindestens ein PTC-Heizer (2) einen röhrenförmigen Körper (5) mit zwei Längswänden (8a, 8b) umfasst, die sich entlang einer Längsrichtung (L) erstrecken, in dem entlang der Längsrichtung (L) eine Vielzahl von PTC-Heizelementen (7) nebeneinander angeordnet sind,
- wobei die PTC-Heizelemente (7) in einem kürzeren Abstand (a1) von einer ersten Längswand (8a) des röhrenförmigen Körpers (5) angeordnet sind, als eine zweite Längswand (8b), die sich gegenüber der ersten Längswand (8a) erstreckt,
- wobei in mindestens einem Zwischenraum (3), der zwischen zwei benachbarten PTC-Heizern (2) vorhanden ist, eine Rippenstruktur (4) angeordnet ist, die sich entlang einer Querrichtung, orthogonal zur Längsrichtung, erstreckt,
**dadurch gekennzeichnet, dass**
- die Rippenstruktur (4) über die ersten Längswände (9a, 9b) der beiden röhrenförmigen Körper (5) hervorsteht, die den Zwischenraum (3) entlang der Querrichtung (Q) begrenzen.

2. Wärmeübertrager nach Anspruch 1,
**dadurch gekennzeichnet, dass**
- die beiden ersten Längswände (8a) zweier benachbarter röhrenförmiger Körper (5) einen Lufteinlass (9a) zum Einbringen der Luft (Lₛ) in den Luftpfad (10) begrenzen, der zwischen den beiden röhrenförmigen Körpern (5) gebildet wird; und dadurch, dass
- die beiden zweiten Längswände (8a, 8b) dieser beiden röhrenförmigen Körper (5) einen Luftauslass (9b) zum Ausbringen der Luft (Lₛ) aus diesem Luftpfad (10) begrenzen.

3. Wärmeübertrager nach Anspruch 1 oder 2,
**dadurch gekennzeichnet, dass**
ein erster Abstand (a1), der senkrecht zur Längsrichtung (L) zwischen den PTC-Heizelementen (7) und der ersten Längswand (8a) gemessen wird, kürzer als ein zweiter Abstand (a2) ist, der senkrecht zur Längsrichtung (L) zwischen diesen PTC-Heizelementen (7) und der zweiten Längswand (8b) gemessen wird, die sich gegenüber der ersten Längswand (8a) befindet.

4. Wärmeübertrager nach Anspruch 3,
**dadurch gekennzeichnet, dass**
ein Unterschied (D) zwischen dem ersten und dem zweiten Abstand (a1, a2) mindestens 2 mm beträgt; oder/und dadurch, dass
der erste Abstand (a1) höchstens 5 mm beträgt und der zweite Abstand mindestens 2 mm (a2) beträgt.

5. Wärmeübertrager nach einem der vorstehenden Ansprüche,
**dadurch gekennzeichnet, dass**
- mindestens ein PTC-Heizelement (7) eine Heizkeramik (11) umfasst, die ähnlich einem Sandwich zwischen zwei elektrischen Kontaktplatten (12a, 12b) zur elektrischen Verbindung der PTC-Heizkeramik (11) mit einer elektrischen Spannungsquelle angeordnet ist,
- die PTC-Heizkeramik (11) ähnlich einer Platte mit einer ersten und zweiten Heizkeramik-Längsseite (15a, 15b) gebildet ist,
- der erste oder zweite Abstand (a1, a2) des PTC-Heizelements (7) von der ersten und zweiten Längswand (8a, 8b) des röhrenförmigen Körpers (5) fixiert oder in Bezug auf die erste oder zweite Heizkeramik-Längsseite (15a, 15b) gemessen wird.

6. Wärmeübertrager nach einem der vorstehenden Ansprüche,
**dadurch gekennzeichnet, dass**
die Rippenstruktur (4) entlang der Querrichtung (Q) um höchstens 4 mm über die ersten beiden Längswände (9a, 9b) hervorsteht.

7. Wärmeübertrager nach einem der vorstehenden Ansprüche,
**dadurch gekennzeichnet, dass**
- die mehreren PTC-Heizer (2) entlang einer Stapelrichtung (S), die sich senkrecht zu sowohl der Längs- als auch der Querrichtung (L, Q) erstreckt, aufeinander gestapelt sind,
- die Rippenstruktur (4) sich selbst auf den beiden röhrenförmigen Körpern (5), die entlang der Stapelrichtung (S) benachbart sind, trägt.

8. Klimaanlagensystem, das einen Wärmeübertrager (1) nach einem der vorstehenden Ansprüche aufweist.

9. Kraftfahrzeug, das ein Klimaanlagensystem nach Anspruch 8 aufweist.

## Revendications

1. Échangeur de chaleur (1) pour un système de climatisation, en particulier d'un véhicule à moteur,
- présentant de multiples dispositifs de chauffage PTC (2) pour chauffer l'air (Lₛ) conduit à travers les échangeurs de chaleur (1), qui sont disposés à une distance les uns des autres, de sorte que les espaces intermédiaires respectifs (3) qui sont présents entre deux dispositifs de chauffage PTC adjacents (2) forment dans chaque cas un chemin d'air (10) à travers lequel l'air (Lₛ) peut circuler,
- dans lequel au moins un dispositif de chauffage PTC (2) comprend un corps tubulaire (5) ayant deux parois longitudinales (8a, 8b) qui s'étendent le long d'une direction longitudinale (L), dans laquelle, le long de la direction longitudinale (L), une pluralité d'éléments chauffants PTC (7) sont disposés les uns à côté des autres,
- dans lequel les éléments chauffants PTC (7) sont disposés à une distance plus courte (a1) d'une première paroi longitudinale (8a) du corps tubulaire (5) qu'une seconde paroi longitudinale (8b) située en vis-à-vis de la première paroi longitudinale (8a),
- dans lequel, dans au moins un espace intermédiaire (3) qui est présent entre deux dispositifs de chauffage PTC adjacents (2), une structure nervurée (4) est disposée, qui s'étend le long d'une direction transversale orthogonalement à la direction longitudinale,
**caractérisé en ce que**
- la structure nervurée (4) fait saillie au-dessus des premières parois longitudinales (9a, 9b) des deux corps tubulaires (5) délimitant l'espace intermédiaire (3) le long de la direction transversale (Q).

2. Échangeur de chaleur selon la revendication 1,
**caractérisé en ce que**
- les deux premières parois longitudinales (8a) de deux corps tubulaires adjacents (5) délimitent une entrée d'air (9a) pour introduire l'air (Lₛ) dans le chemin d'air (10) formé entre les deux corps tubulaires (5) ; et **en ce que**
- les deux secondes parois longitudinales (8a, 8b) de ces deux corps tubulaires (5) délimitent une sortie d'air (9b) pour évacuer l'air (Lₛ) depuis ce chemin d'air (10).

3. Échangeur de chaleur selon la revendication 1 ou 2,
**caractérisé en ce que**
une première distance (a1) mesurée perpendiculairement à la direction longitudinale (L) entre les éléments chauffants PTC (7) et la première paroi longitudinale (8a) est plus courte qu'une seconde distance (a2) mesurée perpendiculairement à la direction longitudinale (L) entre ces éléments chauffants PTC (7) et la seconde paroi longitudinale (8b) située en vis-à-vis de la première paroi longitudinale (8a).

4. Échangeur de chaleur selon la revendication 3,
**caractérisé en ce que**
une différence (D) entre la première et la seconde distance (a1, a2) est d'au moins 2 mm ; ou/et **en ce que**
la première distance (a1) est de 5 mm au maximum et la seconde distance est d'au moins 2 mm (a2).

5. Échangeur de chaleur selon l'une quelconque des revendications précédentes,
**caractérisé en ce que**
- au moins un élément chauffant PTC (7) comprend une céramique chauffante (11), qui est disposée de manière enserrée entre deux plaques de contact électrique (12a, 12b) pour connecter électriquement la céramique chauffante PTC (11) à une source de tension électrique,
- la céramique chauffante PTC (11) est formée en forme de plaque avec un premier et un second
côté longitudinal de céramique chauffante (15a, 15b),
- la première ou la seconde distance (a1, a2) de l'élément chauffant PTC (7) par rapport à la première et à la seconde paroi longitudinale (8a, 8b) du corps tubulaire (5) est fixée ou mesurée par rapport au premier ou au second côté longitudinal de céramique chauffante (15a, 15b).

6. Échangeur de chaleur selon l'une quelconque des revendications précédentes,
**caractérisé en ce que**
la structure nervurée (4) fait saillie le long de la direction transversale (Q) de 4 mm au maximum au-dessus des deux premières parois longitudinales (9a, 9b).

7. Échangeur de chaleur selon l'une quelconque des revendications précédentes,
**caractérisé en ce que**
- les multiples dispositifs de chauffage PTC (2) sont empilés les uns sur les autres le long d'une direction d'empilement (S) qui s'étend perpendiculairement à la fois à la direction longitudinale et également à la direction transversale (L, Q),
- la structure nervurée (4) se soutient elle-même sur les deux corps tubulaires (5) qui sont adjacents le long de la direction d'empilement (S).

8. Système de climatisation présentant un échangeur de chaleur (1) selon l'une quelconque des revendications précédentes.

9. Véhicule à moteur présentant un système de climatisation selon la revendication 8.
